# EUROPÄISCHE PATENTANMELDUNG

(11) **EP 4 574 457 A1**
(43) Veröffentlichungstag der Anmeldung: **25.06.2025**
(21) Anmeldenummer: 24222050.7
(22) Anmeldetag: 20.12.2024
(51) Int. Cl.: B60C 9/00, B60C 9/06, B60C 9/11, B60C 9/18, B60C 9/20, B60C 9/04

(54) **FAHRZEUGREIFEN**

(30) Priorität: 21.12.2023 DE 102023213167
(71) Anmelder: Continental Reifen Deutschland GmbH, 30175 Hannover (DE)
(72) Erfinder: Schunack, Michael, 30175 Hannover (DE); Reese, Wolfgang, 30175 Hannover (DE); Jahr, Michael, 30175 Hannover (DE); Kramer, Thomas, 30175 Hannover (DE)
(74) Vertreter: Continental Corporation

(57) **Zusammenfassung**

Fahrzeugreifen in diagonaler Bauart mit mehreren übereinander angeordneten Verstärkungslagen (3), zu welchen Karkasseinlagen (3b) und ggf. Breakerlagen (3a) bzw. Gürtellagen und/oder Wulstverstärkerstreifen (5) gehören und welche jeweils aus einem in eine Gummimatrix eingebetteten Kordgewebe mit textilen Korden (8) bestehen, wobei die Korde (8) in einander benachbart verlaufenden Verstärkungslagen (3) zueinander im Kreuzverband angeordnet sind.

In den Karkasseinlagen (3b) und in den ggf. vorhandenen Breakerlagen (3a) bestehen die Korde (8) aus einem einzigen Multifilamentgarn oder aus zwei oder drei miteinander endverdrehten Multifilamentgarnen (9) aus Polyamid 4.6.

## Beschreibung

Die Erfindung betrifft einen Fahrzeugreifen in diagonaler Bauart mit mehreren übereinander angeordneten Verstärkungslagen, zu welchen Karkasseinlagen und ggf. Breakerlagen bzw. Gürtellagen und/oder Wulstverstärkerstreifen gehören und welche jeweils aus einem in eine Gummimatrix eingebetteten Kordgewebe mit textilen Korden bestehen, wobei die Korde in einander benachbart verlaufenden Verstärkungslagen zueinander im Kreuzverband angeordnet sind.

Ein derartiger Reifen diagonaler Bauart ist beispielsweise aus der DE 10 2013 106 632 A1 bekannt. Die Korde in einander benachbart verlaufenden Verstärkungslagen sind zueinander derart im Kreuzverband angeordnet, dass sie im Reifenzenit unter einem in allen Verstärkungslagen gleich großen spitzen Winkel zur Umfangsrichtung verlaufen, welcher bei einem Reifen mit einem Verhältnis Querschnittsbreite zu Querschnittshöhe von 1 zwischen 28° und 34°, bei einem Reifen mit einem Verhältnis Querschnittsbreite zu Querschnittshöhe von 0,85 zwischen 26° und 32° beträgt. Dadurch sollen die Diagonalreifen in Umfangsrichtung steifer sein als jene aus dem Stand der Technik und einen geringeren Rollwiderstand aufweisen. Die Korde in den Verstärkungslagen, also den Karkasseinlagen und den Breakerlagen bzw. Gürtellagen, bestehen beispielsweise aus Fäden aus Aramid, Polyamid oder Polyester. Darüber hinaus ist es bei Diagonalreifen üblich, dass die Korde in den Verstärkungslagen aus Multifilamentgarnen aus Polyamid 6.6 bestehen.

Der Erfindung liegt die Aufgabe zugrunde, Diagonalreifen der eingangs genannten Art derart auszuführen, dass sie für den Einsatz bei höheren Umgebungstemperaturen oder unter großer Last, was mit einer erhöhten Temperatur im Reifen einhergeht, besonders gut geeignet sind und eine bessere Temperatur- und Wärmebeständigkeit als die bekannten Diagonalreifen, insbesondere die mit Polyamid 6.6 verstärkten Diagonalreifen, aufweisen.

Gelöst wird die gestellte Aufgabe erfindungsgemäß dadurch, dass in den Karkasseinlagen und in den ggf. vorhandenen Breakerlagen die Korde aus einem einzigen Multifilamentgarn oder aus zwei oder drei miteinander endverdrehten Multifilamentgarnen aus Polyamid 4.6 bestehen.

Polyamid 4.6 bewirkt eine hohe Steifigkeit der Verstärkungslagen über einen weiten Temperaturbereich, weist eine hohe Wärmebeständigkeit auf und ist daher besonders vorteilhaft in Verstärkungslagen von Diagonalreifen als Material der Korde einsetzbar, vor allem auch in Reifen, die höheren Umgebungstemperaturen dauerhaft standhalten sollen oder unter großer Last eingesetzt werden. Insbesondere ist der Modulverlust von Polyamid 4.6 bei höheren Temperaturen geringer als bei Polyamid 6.6, Korde aus Polyamid 4.6 relaxieren nicht so stark wie jene aus Polyamid 6.6. Die Temperaturstabilität ist insbesondere anhand des temperaturabhängigen Moduls quantifizierbar. Ein Material, welches temperaturstabiler ist, demnach einen geringeren Modulverlust zeigt, erlaubt den Einsatz dünnerer und damit leichterer Korde in den Verstärkungslagen. Dies ist vorteilhaft für den Reifen hinsichtlich einer Gewichtsreduktion des Reifens insgesamt und einer Reduktion des Reifenrollwiderstandes.

Für eine gute Dauerhaltbarkeit und eine hohe Performance des Reifens ist es ferner vorteilhaft, wenn die Korde in sämtlichen Karkasseinlagen und in den gegebenenfalls vorhanden Breakerlagen übereinstimmen, daher aus der gleichen Polyamidtype bestehen.

Vorteilhafterweise bestehen auch die Korde in den, je nach Reifentyp, vorgesehenen Wulstverstärkerstreifen ebenfalls aus einem Multifilamentgarn oder aus mehreren Multfilamentgarnen aus Polyamid 4.6.

Je nach Reifentyp und Einsatzzweck sind verschiedene Ausführungen des Multifilamentgarns bzw. der Multiflamentgarne besonders vorteilhaft gegenüber den bislang in diesen Reifentypen bevorzugt eingesetzten Garnen aus Polyamid 6.6, insbesondere hinsichtlich der oben erwähnten Effekte, wie Wärmebeständigkeit, Steifigkeit der Verstärkungslagen, geringe Lagendicke und damit Gewichtsreduktion und Reduktion des Rollwiderstands.

Reifen für den Einsatz bei Zweirädern weisen beispielsweise bevorzugt Multifilamentgarne in den Verstärkungslagen auf, welche 100 dtex bis 300 dtex, insbesondere 200 dtex bis 300 dtex, besonders bevorzugt 235 dtex, aufweisen. In Fahrzeugreifen für Personenkraftwagen und dergleichen sind in den Verstärkungslagen bevorzugt Multfilamentgarne enthalten mit dtex > 300dtex bis 700dtex, insbesondere 400 dtex bis 500 dtex, besonders bevorzugt 470 dtex.

Fahrzeugreifen für Fahrzeuge, die einer höheren Last unterliegen, wie beispielsweise Nutzfahrzeugreifen, weisen in den Verstärkungslagen bevorzugt Multifilamentgarne mit dtex > 700 bis 1.200 dtex, insbesondere 800 dtex bis 1.100 dtex, besonders bevorzugt 940 dtex, auf. Als Alternative für solche Fahrzeuge eignen sich Verstärkungslagen mit Multifilamentgarnen mit dtex > 1.200 bis 1.600 dtex, insbesondere 1.300 dtex bis 1.500 dtex, besonders bevorzugt 1.400 dtex, oder Multifilamentgarne mit dtex > 1.600 bis 2.100 dtex, insbesondere 1.700 dtex bis 2.000 dtex, besonders bevorzugt 1.880 dtex.

Bei Fahrzeugreifen diagonaler Bauart mit Verstärkungslagen, welche Korde aus einem einzigen Multifilamentgarn, also x1-Konstruktionen, aufweisen, werden die Multifilamentgarne bevorzugt mit 200 epdm bis 600 epdm, insbesondere bis 500 epdm, besonders bevorzugt bis 450 epdm, angeordnet.

Bei Fahrzeugreifen mit Verstärkungslagen mit Korden aus zwei oder drei miteinander endverdrehten Multiflamentgarnen erfolgt bevorzugt die Anordnung der Multfilamentgarnen mit 50 epdm bis 300 epdm, insbesondere bis 250 epdm, besonders bevorzugt bis 200 epdm.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 eine Ansicht einer Ausführungsform eines erfindungsgemäßen Fahrzeugreifens, teilweise im aufgeschnittenen Zustand, mit freigelegten Verstärkungslagen,
Fig. 2 und Fig. 3 Querschnitte von Ausführungsformen von Korden.

Die Erfindung betrifft Fahrzeugreifen, vorzugsweise einen Fahrzeugluftreifen, in diagonaler Bauart (Diagonalreifen), insbesondere LKW-Reifen, Industriereifen, OTR-Reifen, PKW-Reifen und Reifen für Zweiräder, beispielsweise Motorräder, Mopeds und Fahrräder.

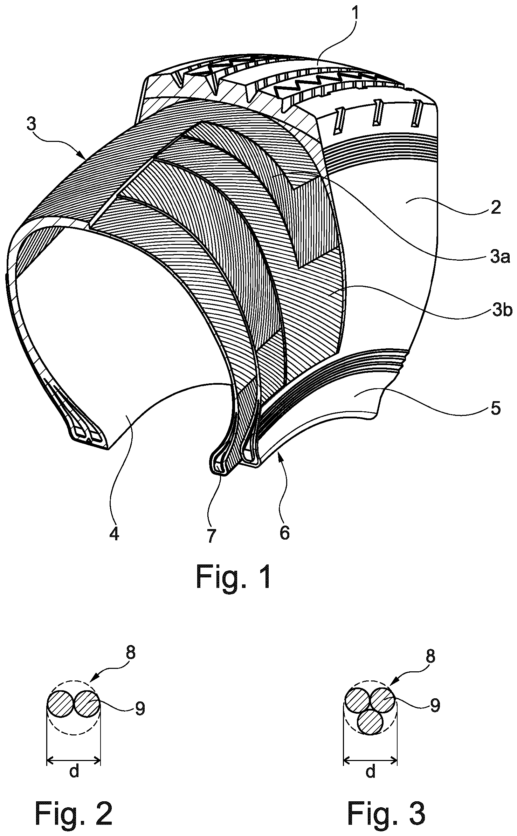

Fig. 1 zeigt ein Beispiel eines in diagonaler Bauart ausgeführten Fahrzeugreifens mit einem Laufstreifen 1, Seitenwänden 2, Verstärkungslagen 3, zu welchen beim gezeigten Ausführungsbeispiel Breakerlagen 3a bzw. Gürtellagen, Karkasseinlagen 3b und Wulstverstärkerstreifen 5 gehören, einer Innenschicht 4 und Wulstbereichen 6 mit Wulstkernen 7. Der Reifen weist daher einen für diesen Reifentyp üblichen Aufbau auf.

Die Karkasseinlagen 3b erstrecken sich auf der Innenschicht 4 über den Umfang des Reifens und zwischen den Wulstkernen 7 sowie entlang und innerhalb der Seitenwände 2 und des Laufstreifens 1. Bei der dargestellten Ausführungsform weist ferner jeder Wulstbereich jeweils zwei Wulstkerne 7 auf, die sich in bekannter Weise aus Stahlseilen zusammensetzen und es sind pro Wulstkernpaar mehrere Karkasseinlagen 3b vorgesehen, welche um die betreffenden Wulstkerne 7 von innen nach außen umgeschlagen sind und in bekannter Weise in den Wulstbereichen enden. Die Breakerlagen 3a sind radial innerhalb des Laufstreifens 1 verlaufend im Reifen eingebaut und verstärken derart den Laufstreifenbereich. Sowohl die Anzahl der Karkasseinlagen 3b als auch die Anzahl der Breakerlagen 3a kann in den üblichen Bereichen, je nach Reifentyp, variieren, wobei der Reifen auch ausschließlich Karkasseinlagen 3b als Verstärkungslagen aufweisen kann

Die Breakerlagen 3a, die Karkasseinlagen 3b und die Wulstverstärkungsstreifen 5 bestehen jeweils aus einem in eine Gummimatrix eingebetteten Kordgewebe mit textilen Korden 8, auf welche weiter unten näher eingegangen wird. Sowohl die Breakerlagen 3a als auch die Karkasseinlagen 3b sind derart im Reifen verbaut, dass ihre Korde 8 von Lage zu Lage abwechselnd linkssteigend und rechtssteigend verlaufen, sodass ein stabiler Lagenverband mit sich kreuzenden Korden 8 gebildet ist.

Im fertig vulkanisierten Reifen schließen die Korde 8 in den Breakerlagen 3a und in den Karkasseinlagen 3b im Reifenzenit, also an ihren Schnittstellen mit der Äquatorebene des Reifens, mit der Umfangsrichtung des Reifens Winkel ein, die jeweils gleich groß sind und üblicherweise zwischen 20° und 45° betragen, wobei bei einem bestimmten Reifen die Winkel der Korde 8 gleich groß sind - bis auf Abweichungen durch Fertigungstoleranzen von 2° bis 3°. Die Korde in den Wulstverstärkungsstreifen 5 verlaufen parallel zueinander und zur radialen Richtung des Reifens unter einem Winkel von bis zu 45°.

Die Korde 8 sind Korde aus einem einzigen Multifilamentgarn und aus zwei oder drei miteinander endverdrehten Multifilamentgarnen 9 aus Polyamid 4.6 (PA 4.6). Fig. 2 und Fig. 3 zeigen Querschnitte von Korden 8 aus zwei und aus drei miteinander endverdrehten Multifilamentgarnen 9. In Folge der Endverdrehung der Multifilamentgarne 9 weist der jeweilige Kord 8 über seine Länge einen kreisförmigen Querschnitt mit einem Durchmesser d auf und beansprucht in den Verstärkungslagen 3 im Querschnitt jeweils die Fläche eines Kreises.

In der nachstehenden Tabelle 1 sind drei erfindungsgemäße Ausführungen von Korden 8 - Beispiel E1, Beispiel E2 und Beispiel E3, jeweils mit entsprechenden Referenzbeispielen aus dem Stand der Technik, Beispiel Ref. 1, Beispiel Ref. 2 und Beispiel Ref. 3 - angegeben. Der Korde 8 der Beispiele E1, E2 und E3 ersetzen jeweils die zugehörigen Referenz- Korde aus Polyamid 6.6 (PA 6.6). In sämtlichen Beispielen E1, E2 und E3 sind die Korde 8 Korde aus zwei miteinander endverdrehten Multifilamentgarnen aus PA 4.6. Die Korde der zugehörigen Referenzbeispiele Ref. 1, Ref. 2 und Ref. 3 sind Korde aus zwei miteinander endverdrehten Multifilamentgarnen aus PA 6.6.

Angegeben sind jeweils der dtex-Wert, der Durchmesser des Kordes, die vom Kord eingenommene kreisförmige Fläche, ein Beispiel einer bevorzugten Anordnung in einer Breakerlage oder einer Karkasseinlage in epdm (Ends per Dezimeter im Gewebe), ein Wert für einen bevorzugten gegenseitigen lichten Abstand (Spacing) der Korde, ferner die vom Kord eingenommene Kreisfläche multipliziert mit den epdm, jeweils in Prozent, wobei der Wert der Referenzbeispiele Ref. 1, Ref. 2 und Ref. 3 jeweils 100% gesetzt ist. Bevorzugt erfolgt die Ausführung/Anordnung der erfindungsgemäßen Korde E1, E2 und E3 derart, dass der Wert von "Fläche x epdm" in % jeweils in der Größenordnung von 75 % des Wertes des zugehörigen Referenzbeispiels beträgt. Zu erkennen ist, dass die Beispiele E1, E2, E3 gegenüber den Referenzbeispielen Ref. 1, Ref. 2 und Ref. 3 mit den Vorteilen einer dünneren Ausführung der Verstärkungslage und einer damit einhergehenden Gewichtsreduktion des Reifens verbunden sind.

**Tabelle 1**

| | **Ref. 1** | **E1** | **Ref. 2** | **E2** | **Ref. 3** | **E3** |
|---|---|---|---|---|---|---|
| Material | PA 6.6 | PA 4.6 | PA 6.6. | PA 4.6 | PA 6.6 | PA 4.6 |
| dtex | 1880 × 2 | 1400 × 2 | 1400 × 2 | 940 × 2 | 940 × 2 | 470 × 2 |
| dtex [%] | 100% | 74% | 100% | 67% | 100% | 50% |
| Durchmesser [mm] | 0,8 | 0,66 | 0,66 | 0,53 | 0,53 | 0,37 |
| Fläche [mm²] | 0,5 | 0,34 | 0,34 | 0,22 | 0,22 | 0,11 |
| epdm | 105 | 115 | 95 | 110 | 54 | 83 |
| Spacing | 0,15 | 0,21 | 0,39 | 0,38 | 1,32 | 0,83 |
| Fläche x epdm | 52,8 | 39,3 | 32,5 | 24,3 | 11,9 | 8,9 |
| Fläche x epdm [%] | 100 | 75 | 100 | 75 | 100 | 75 |

Tabelle 2 zeigt Kraftdehnungsdaten, ermittelt gemäß ASTM D885 (2014) von Korden der Konstruktion 470 dtex x 2 aus PA 4.6 im Vergleich zu Korden der Konstruktion 470 dtex x 2 aus PA 6.6, jeweils bezüglich des Moduls bei Raumtemperatur (RT), bei 80°C, bei 100°C und bei 120°C. LASE steht für Load at Specific Elongation, im gegenständlichen Fall bei 5 % Dehnung. Je nach Temperatur ergibt sich bei einem Kord aus PA 4.6 eine um ca. 20 % bis 35 % höhere Festigkeit gegenüber dem Kord aus PA 6.6.

**Tabelle 2**

| **LASE 5 %** | **PA 6.6** | **PA 4.6** |
|---|---|---|
| RT | 15,5 | 15,0 |
| 80°C | 9,5 | 11,6 |
| 100°C | 8,1 | 11,2 |
| 120°C | 7,1 | 9,5 |

Wie bereits erwähnt sind die Korde 8 Korde aus einem Multifilamentgarn oder aus zwei oder drei miteinander endverdrehten Multifilamentgarnen aus PA 4.6. Bei sämtlichen Korden wird jeweils nur eine bestimmte Garntype verwendet, wobei die nachstehende Tabelle 3 fünf Beispiele G1, G2, G3, G4 und G5 von bevorzugt einzusetzenden Multifilamentgarnen mit zugehörigen dtex-Werten, jeweils einem Basisbereich, einem bevorzugten Bereich und einem einzelnen besonders bevorzugten Wert wiedergibt.

**Tabelle 3**

| | **G1** | **G2** | **G3** | **G4** | **G5** |
|---|---|---|---|---|---|
| Basisbereich [dtex] | 100-300 | > 300-700 | > 700-1200 | > 1200-1600 | >1600-2100 |
| bevorzugter Bereich [dtex] | 200-300 | 400-500 | 800-1100 | 1300-1500 | 1700-2000 |
| besonders bevorzugter Wert [dtex] | 235 | 470 | 940 | 1400 | 1880 |

Tabelle 4 gibt Wertebereiche für den Twistfaktor für Korde aus einem einzigen Multifilamentgarn (als "x1- Korde" bezeichnet) und für Korde aus zwei oder drei Multifilamentgarnen (als "x2- und x3- Korde" bezeichnet) aus PA 4.6 wieder. Angegeben sind jeweils ein Basiswertebereich, ein bevorzugter Wertebereich und ein besonders bevorzugter Wertebereich.

**Tabelle 4**

| | **Twistfaktor, Bereich** | **Twistfaktor, bevorzugter Bereich** | **Twistfaktor, besonders bevorzugter Bereich** |
|---|---|---|---|
| x1- Kord | 30-70 | 35-65 | 40-65 |
| x2- Kord und x3- Kord | 150-250 | 160-240 | 175-225 |

| | | | |
|---|---|---|---|
| Definition Twistfaktor: TF = Twist level × (dtex/1000)^0,5 Twist level in Drehung pro Meter | | | |

Die Drehung der Korde aus einem einzigen Multifilamentgarn kann in S- oder in Z-Richtung erfolgen, bei Korden aus zwei oder drei Multifilamentgarnen zuerst in S-oder in Z-Richtung gefolgt von einer Drehung in die jeweils entgegengesetzte Richtung.

Tabelle 5 gibt für Korde aus einem Multifilamentgarn (x1-Kord) und solchen aus zwei oder drei Multifilamentgarnen (x2- und x3Korde), jeweils aus PA 4.6, vorteilhafte Bereiche für epdm-Werte an.

**Tabelle 5**

| | **epdm Bereich** | **epdm bevorzugter Bereich** | **epdm besonders bevorzugter Bereich** |
|---|---|---|---|
| 1x- Kord | 200-600 | 200-500 | 200-450 |
| x2- Kord und x3- Kord | 50-300 | 50-250 | 50-200 |

### Bezugszeichenliste

- 1: Laufstreifen
- 2: Seitenwand
- 3: Verstärkungslage
- 3a: Breakerlage
- 3b: Karkasseinlage
- 4: Innenschicht
- 5: Wulstverstärkerstreifen
- 6: Wulstbereich
- 7: Wustkern
- 8: Korde
- 9: Multifilamentgarn
- d: Durchmesser

## Patentansprüche

1. Fahrzeugreifen in diagonaler Bauart mit mehreren übereinander angeordneten Verstärkungslagen (3), zu welchen Karkasseinlagen (3b) und ggf. Breakerlagen (3a) bzw. Gürtellagen und/oder Wulstverstärkerstreifen (5) gehören und welche jeweils aus einem in eine Gummimatrix eingebetteten Kordgewebe mit textilen Korden (8) bestehen, wobei die Korde (8) in einander benachbart verlaufenden Verstärkungslagen (3) zueinander im Kreuzverband angeordnet sind,
**dadurch gekennzeichnet,**
**dass** in den Karkasseinlagen (3b) und in den ggf. vorhandenen Breakerlagen (3a) die Korde (8) aus einem einzigen Multifilamentgarn oder aus zwei oder drei miteinander endverdrehten Multifilamentgarnen (9) aus Polyamid 4.6 bestehen.

2. Fahrzeugreifen nach Anspruch 1, **dadurch gekennzeichnet, dass** die Korde (8) in sämtlichen Karkasseinlagen (3b) und in den ggf. vorhandenen Breakerlagen (3a) übereinstimmend, aus der gleichen Garntype bestehend, ausgeführt sind.

3. Fahrzeugreifen nach Anspruch 1 oder 2, **dadurch gekennzeichnet, dass** die Korde (8) in Wulstverstärkerstreifen (5) ebenfalls aus einem einzigen Multifilamentgarn oder aus zwei oder drei Multifilamentgarnen (9) aus Polyamid 4.6 bestehen.

4. Fahrzeugreifen nach einem der Ansprüche 1 bis 3, **dadurch gekennzeichnet, dass** das Multifilamentgarn bzw. die Multifilamentgarne (9) 100 dtex bis 300 dtex, insbesondere 200 dtex bis 300 dtex, besonders bevorzugt 235 dtex, aufweist bzw. aufweisen.

5. Fahrzeugreifen nach einem der Ansprüche 1 bis 3, **dadurch gekennzeichnet, dass** das Multifilamentgarn bzw. die Multifilamentgarne (9) > 300 detx bis 700 dtex, insbesondere 400 dtex bis 500 dtex, besonders bevorzugt 470 dtex, aufweist bzw. aufweisen.

6. Fahrzeugreifen nach einem der Ansprüche 1 bis 3, **dadurch gekennzeichnet, dass** das Multifilamentgarn bzw. die Multifilamentgarne (9) >700 dtex bis 1200 dtex, insbesondere 800 dtex bis 1100 dtex, besonders bevorzugt 940 dtex, aufweist bzw. aufweisen.

7. Fahrzeugreifen nach einem der Ansprüche 1 bis 3, **dadurch gekennzeichnet, dass** das Multifilamentgarn bzw. die Multifilamentgarne (9) >1200 dtex bis 1600 dtex, insbesondere 1300 dtex bis 1500 dtex, besonders bevorzugt 1400 dtex, aufweist bzw. aufweisen.

8. Fahrzeugreifen nach einem der Ansprüche 1 bis 3, **dadurch gekennzeichnet, dass** das Multifilamentgarn bzw. die Multifilamentgarne (9) >1600 dtex bis 2100 dtex, insbesondere 1700 dtex bis 2000 dtex, besonders bevorzugt 1880 dtex, aufweist bzw. aufweisen.

9. Fahrzeugreifen nach einem der Ansprüche 1 bis 8, **dadurch gekennzeichnet, dass** die Korde (8) aus einem einzigen Multifilamentgarn (9) bestehen und in den Verstärkungslagen (3) mit 200 epdm bis 600 epdm, insbesondere bis 500 epdm, bevorzugt bis 450 epdm, angeordnet sind.

10. Fahrzeugreifen nach einem der Ansprüche 1 bis 8, **dadurch gekennzeichnet, dass** die Korde (8) aus zwei oder drei miteinander endverdrehten Multifilamentgarnen (9) bestehen und in den Verstärkungslagen (3) mit 50 epdm bis 300 epdm, insbesondere bis 250 epdm, bevorzugt bis 200 epdm, angeordnet sind.
